# EUROPEAN PATENT APPLICATION

(11) **EP 3 358 880 A1**
(43) Date of publication of application: **08.08.2018**
(21) Application number: 15906524.2
(22) Date of filing: 23.10.2015
(51) Int. Cl.: H04W 28/24, H04W 72/10

(54) **METHOD, DEVICE AND SYSTEM FOR CONTROLLING QUALITY OF SERVICE**

(71) Applicant: Huawei Technologies Co., Ltd., Longgang District Shenzhen, Guangdong 518129 (CN)
(72) Inventor: PANG, Lingli, Shenzhen Guangdong 518129 (CN); HUANG, Min, Shenzhen Guangdong 518129 (CN); ZHENG, Xiaoxiao, Shenzhen Guangdong 518129 (CN)
(74) Representative: Epping - Hermann - Fischer
(86) International application number: PCT/CN2015/092773
(87) International publication number: WO 2017/067007

(57) **Abstract**

Embodiments of the present invention provide a quality of service control method, a device, and a system, so as to resolve at least a prior-art problem that proper resource allocation and use cannot be ensured when a service is performed and consequently resource utilization is reduced. The method includes: receiving, by a first network device, first information sent by UE, where the first information includes service information of the UE; determining, by the first network device, second information according to the first information, where the second information includes information used to represent quality of service of the service; and sending, by the first network device, the second information to a second network device. The present invention is applicable to the field of mobile communications.

## Description

### TECHNICAL FIELD

The present invention relates to the field of mobile communications, and in particular, to a quality of service control method, a device, and a system.

### BACKGROUND

Quality of service (English: Quality of Service, QoS for short) is an overall effect of service performance, and a satisfaction degree of a user to a service depends on the effect.

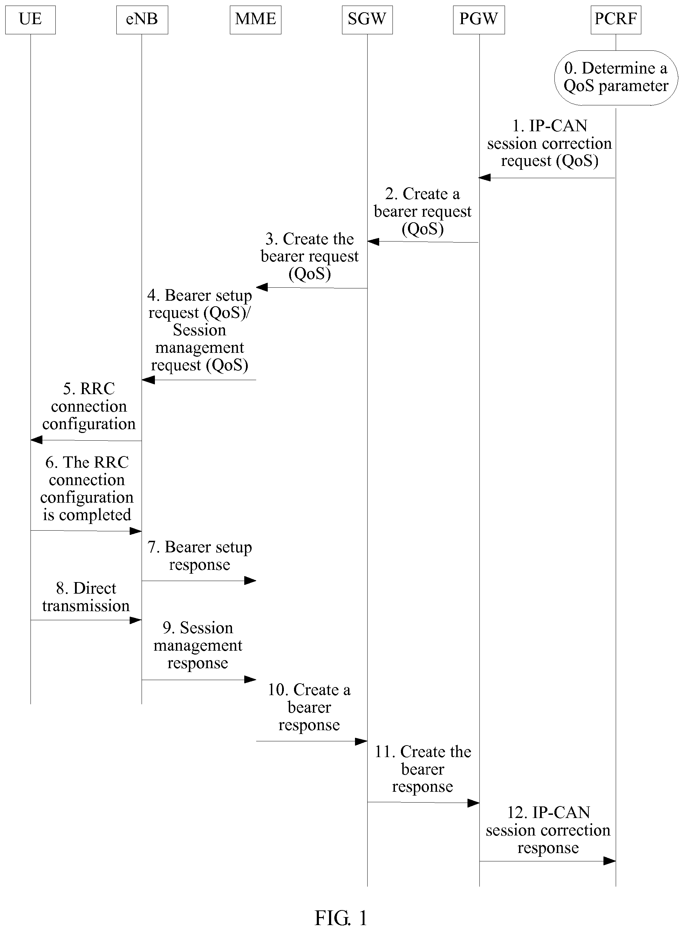

In a mobile communications system, QoS parameters of a service in different networks are not completely the same, and determining manners of the QoS parameters are also different. As shown in FIG. 1, in an evolved packet system (English: Evolved Packet System, EPS for short) network, for a dedicated bearer, a QoS parameter of a service is determined by a policy and charging rules function (English: Policy and Charging Rules Function, PCRF for short) according to both a subscribed QoS and a service of user equipment (English: User Equipment, UE for short). After determining the QoS parameter of the service, the PCRF sends the QoS parameter to other nodes (including: a packet data network gateway (English: Packet Data Network GateWay, PGW for short), a serving gateway (English: Serving GateWay, SGW for short), a mobility management entity (English: Molibility Mangemant Enity, MME for short), an evolved NodeB (English: Evolved Node B, eNB for short)) at a previous level in sequence. Each node determines, according to the QoS parameter, subsequent transmission of a data packet of a bearer corresponding to the UE. That is, in the prior art, after the PCRF determines a QoS parameter of a service, the QoS parameter is usually fixed when the service is performed. If a change is indeed required, the change needs to be triggered by the PCRF, and the parameter is changed by using signaling at each level.

However, requirements on QoS parameters of some services may change relatively frequently. If an existing QoS determining and assurance mechanism is used, proper resource configuration and use cannot be ensured. Consequently, resource utilization is reduced.

Therefore, how to ensure proper configuration and use of resources to improve resource utilization becomes a problem to be urgently resolved.

### SUMMARY

Embodiments of the present invention provide a quality of service control method, a device, and a system, so as to resolve at least a prior-art problem that proper resource allocation and use cannot be ensured when a service is performed and consequently resource utilization is reduced.

To achieve the foregoing objective, the following technical solutions are used in the embodiments of the present invention:

According to a first aspect, a quality of service control method is provided. The method includes:
receiving, by a first network device, first information sent by user equipment (UE), where the first information includes service information of the UE;
determining, by the first network device, second information according to the first information, where the second information includes information used to represent quality of service (QoS) of the service; and
sending, by the first network device, the second information to a second network device.

Optionally, before the determining, by the first network device, second information according to the first information, the method further includes:
sending, by the first network device, a first request message to a third network device, where the first request message is used to request for subscription information of the service or the UE; and
receiving, by the first network device, the subscription information sent by the third network device; and
the determining, by the first network device, second information according to the first information includes:
   determining, by the first network device, the second information according to the first information and the subscription information.

Optionally, in a possible implementation, the sending, by the first network device, the second information to a second network device includes: sending, by the first network device, the second information to the second network device by using a signaling transmission channel between the first network device and the second network device.

Optionally, in a possible implementation, the sending, by the first network device, the second information to a second network device includes: encapsulating, by the first network device, the second information in a service data packet header, and sending the second information to the second network device.

Further, the encapsulating, by the first network device, the second information in a service data packet header, and sending the second information to the second network device includes:
encapsulating, by the first network device, the second information in a differentiated services code point (DSCP) field or a newly added field of an Internet Protocol IP data packet header, and sending the second information to the second network device; or
encapsulating, by the first network device, the second information in an extension field of a serving general packet radio service tunneling protocol (GTP) data packet header, and sending the second information to the second network device.

According to a second aspect, a first network device is provided. The first network device includes: a receiving unit, a processing unit, and a sending unit, where
the receiving unit is configured to receive first information sent by user equipment (UE), where the first information includes service information of the UE;
the processing unit is configured to determine second information according to the first information, where the second information includes information used to represent quality of service (QoS) of the service; and
the sending unit is configured to send the second information to a second network device.

Optionally, the sending unit is further configured to: before the processing unit determines the second information according to the first information, send a first request message to a third network device, where the first request message is used to request for subscription information of the service or the UE;
the receiving unit is further configured to receive the subscription information sent by the third network device; and
the processing unit is specifically configured to determine the second information according to the first information and the subscription information.

Optionally, in a possible implementation, the sending unit is specifically configured to send the second information to the second network device by using a signaling transmission channel between the first network device and the second network device.

Optionally, in a possible implementation, the sending unit is specifically configured to encapsulate the second information in a service data packet header, and send the second information to the second network device.

Further, the sending unit is specifically configured to: encapsulate the second information in a differentiated services code point (DSCP) field or a newly added field of an Internet Protocol IP data packet header, and send the second information to the second network device; or encapsulate the second information in an extension field of a serving general packet radio service tunneling protocol (GTP) data packet header, and send the second information to the second network device.

According to a third aspect, a first network device is provided. The first network device includes a processor, a memory, a bus, and a communications interface, where the memory is configured to store a computer executable instruction; the processor is connected to the memory by using the bus; and when the first network device runs, the processor executes the computer executable instruction stored in the memory, so that the first network device performs the quality of service control method according to any one of the first aspect.

According to a fourth aspect, a quality of service control method is provided. The method includes:
obtaining, by user equipment (UE), first information, where the first information includes service information of the UE; and
sending, by the UE, the first information to a first network device.

According to a fifth aspect, user equipment (UE) is provided. The UE includes: a processing unit and a sending unit, where the processing unit is configured to obtain first information, where the first information includes service information of the UE; and
the sending unit is configured to send the first information to a first network device.

According to a third aspect, user equipment (UE) is provided. The UE includes a processor, a memory, a bus, and a communications interface, where the memory is configured to store a computer executable instruction; the processor is connected to the memory by using the bus; and when the UE runs, the processor executes the computer executable instruction stored in the memory, so that the UE performs the quality of service control method according to the fourth aspect.

Optionally, in any possible implementation of any one of the first aspect to the sixth aspect, the service information of the UE includes at least one of the following information: service identifier information, request indication type information, to-be-received data information, service status information, local routing information, transmission control protocol (TCP) proxy information, and data routing information.

Optionally, in any possible implementation of any one of the first aspect to the third aspect, the second information includes service data priority information, and the service data priority information is used to represent the QoS of the service.

Optionally, in any possible implementation of any one of the first aspect to the third aspect, the second information further includes at least one of the following information: a service identifier of the service, a minimum delay of the service, a maximum throughput of the service, a maximum bit rate of the service, a guaranteed bit rate of the service, and reliability and a minimum cost of the service.

Preferably, in any possible implementation of any one of the first aspect to the sixth aspect, the first network device is a network device obtaining an air-interface resource allocation status in real time in a data transmission process.

According to a seventh aspect, a quality of service control system is provided. The system includes the user equipment (UE) according to the fifth aspect and the first network device according to the second aspect; or the system includes the user equipment (UE) according to the sixth aspect and the first network device according to the third aspect.

Based on the quality of service control method, the device, and the system provided in the embodiments of the present invention, in the embodiments of the present invention, the first network device receives the first information sent by the UE, and the first information includes the service information of the UE. Therefore, the first network device may determine the second information according to the first information, and send the second information to the second network device. The second information includes the information used to represent the QoS of the service. That is, in the embodiments of the present invention, a QoS parameter can be flexibly adjusted according to the service information of the UE. By contrast, in the prior art, the QoS parameter is usually fixed when the service is performed. Therefore, proper resource allocation and use can be ensured, thereby improving resource utilization.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and a person of ordinary skill in the art may still derive other drawings from these accompanying drawings without creative efforts.
FIG. 1 is a schematic diagram of a QoS exchange process in an existing EPS network;
FIG. 2 is a schematic architectural diagram of a mobile communications system according to an embodiment of the present invention;
FIG. 3 is a schematic diagram 1 of interaction of a quality of service control method according to an embodiment of the present invention;
FIG. 4 is a schematic diagram 2 of interaction of a quality of service control method according to an embodiment of the present invention;
FIG. 5 is a schematic diagram 3 of interaction of a quality of service control method according to an embodiment of the present invention;
FIG. 6 is a schematic diagram 4 of interaction of a quality of service control method according to an embodiment of the present invention;
FIG. 7 is a schematic structural diagram of a first network device according to an embodiment of the present invention;
FIG. 8 is a schematic structural diagram of UE according to an embodiment of the present invention;
FIG. 9 is a schematic structural diagram of an apparatus for quality of service control according to an embodiment of the present invention; and
FIG. 10 is a schematic structural diagram of a quality of service control system according to an embodiment of the present invention.

### DESCRIPTION OF EMBODIMENTS

The following describes the technical solutions in the embodiments of the present invention with reference to the accompanying drawings in the embodiments of the present invention. Apparently, the described embodiments are merely a part instead of all of the embodiments of the present invention. In the following descriptions, for the purpose of explanation instead of limitation, particular details are described for clear understanding. In some embodiments, an apparatus, a circuit, and a method that are publicly known are not described in detail, so that the descriptions are not ambiguous due to unnecessary details. In the specification, a same reference numeral or a same name refers to same or similar elements.

For ease of describing the technical solutions in the embodiments of the present invention clearly, in the embodiments of the present invention, words such as "first" and "second" are used to distinguish same or similar items with a basically same function and role. A person of ordinary skill in the art can understand that the words such as "first" and "second" do not define the amount and the operating sequence.

The present invention is mainly applied to a mobile communications system. The mobile communications system may be specifically a universal mobile telecommunications system (English: Universal Mobile Telecommunications System, UMTS for short), or may be a long term evolution (English: Long Term Evolution, LTE for short) system, an LTE advanced (English: LTE Advanced, LTE-A for short) system, another future release of further-evolution communications system, or another mobile communications system, or the like. This is not specifically limited in the embodiments of the present invention.

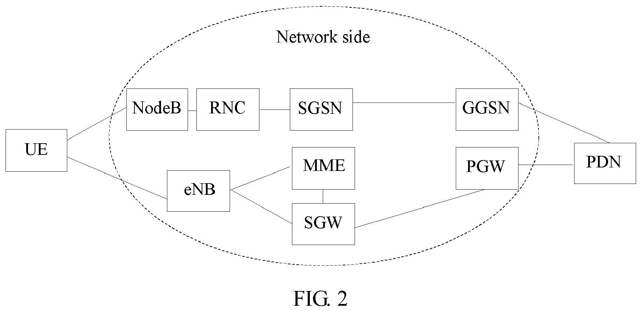

As shown in FIG. 2, for the UMTS, UE accesses a packet data network (English: Packet Data Network, PDN for short) network by using a base station (English: NodeB), a radio network controller (English: Radio Network Control, RNC for short), a serving general packet radio service (English: General Packet Radio Service, GPRS for short) support node (English: Serving GPRS Support Node, SGSN for short), and a gateway GPRS support node (English: Gateway GPRS Support Node, GGSN for short).

For the LTE system, UE accesses a PDN network by using an eNB, an MME, an SGW, and a PGW.

A network device in each embodiment below may be an access network device (for example, the RNC in the UMTS or the eNB in the LTE system) in the mobile communications system shown in FIG. 2, may be a core network device (for example, the SGSN or the GGSN in the UMTS or the MME, the SGW, or the PGW in the LTE system) in the mobile communications system shown in FIG. 2, or may be an access network device or a core network device in another mobile communications system. Certainly, the network device in each embodiment below may alternatively be any relay device in a service data transmission process. The relay device may be UE. This is not specifically limited in the embodiments of the present invention.

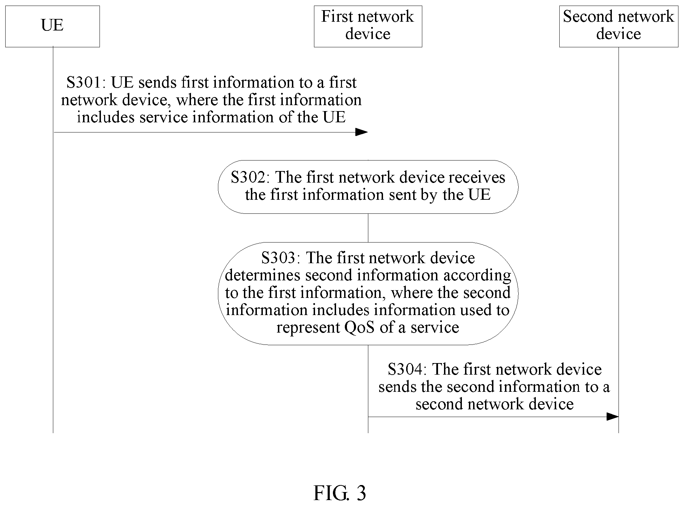

Based on the foregoing mobile communications system, an embodiment of the present invention provides a quality of service control method. As shown in FIG. 3, the method includes the following steps.

S301: UE sends first information to a first network device, where the first information includes service information of the UE.

S302: The first network device receives the first information sent by the UE.

S303: The first network device determines second information according to the first information, where the second information includes information used to represent QoS of the service.

S304: The first network device sends the second information to a second network device.

First, it should be noted that the "first network device" and the "second network device" described in this embodiment of the present invention may be any network device described in the foregoing embodiment, and "first" and "second" are merely used to distinguish between different network devices. This is uniformly noted herein.

Specifically, in step S301 in this embodiment of the present invention, the service information of the UE includes at least one of the following information: service identifier information, request indication type information, service cache information, to-be-received data information, service status information, local routing information, transmission control protocol (English: Transmission Control Protocol, TCP for short) proxy information, and data routing information.

The service identification information is used to indicate an OTT (English: Over The Top) or a service provider to which a service belongs, a name or an identifier of a service, and/or the like. The service identifier information may include: at least one of information such as provider information of the service, a type of the service, a name of an application providing the service, the name of the service, and a server address (for example, an Internet Protocol (English: Internet Protocol, IP for short) address and/or a TCP port number) corresponding to the service.

Using a video service as an example, a provider of the service may include different application names such as Sohu video and Tencent video, or provider information or an address (a port number) of the service.

The type of the service may include a specific name that reflects a service feature, such as a video service or a game. Further, the video service may be classified into a live service, an on-demand service, and the like.

The name of the service may be specifically a name or an internal serial number of the service, for example, channel information or program information in the video service, for example, The Journey of Flower (a Chinese television series).

It should be noted that the service in this embodiment of the present invention may be a sub-service flow of a specific application or data of a fragment corresponding to an application. This is not specifically limited in this embodiment of the present invention. For the first information in this embodiment of the present invention, each service of the UE may correspond to one piece of first information, or multiple services that are being performed or to be performed by the UE may correspond to one piece of first information. This is not specifically limited in this embodiment of the present invention. Certainly, when the UE has multiple services, each service may have a group of first information, or all the services have only a group of first information. This is not limited in this embodiment of the present invention.

The request indication type information is used to indicate whether a service request initiated by a user is a request for the service for the first time or whether the user is waiting at a buffering stage. For example, using a video service as an example, the information is used to indicate whether the UE is at a wait stage of video play, and is mainly used to indicate waiting of the user due to that a video is played for the first time or the video is dragged or the like.

The service cache information is used to indicate a size of a cache when the first information is reported, whether dynamic adaptive streaming over hypertext transfer protocol (English: Dynamic Adaptive Streaming over HTTP (English: HyperText Transfer Protocol, HTTP for short), DASH for short) is supported, and/or the like. The service cache information may include: at least one of information such as a total size of a cache, a size of data in a cache when the request is sent, a size of an unoccupied cache when the request is sent, a bit rate corresponding to data in a cache, and a fast scheduling instruction for requesting a data packet.

Specifically, the cache may be a cache at the application layer (for example, a size of storage space occupied by a played service or an application), or may be a TCP cache. This is not specifically limited in this embodiment of the present invention. The size of the data in the cache may be a time required for clearing the data in the cache. Using a video service as an example, the information may be a time for which the data in the cache can be played.

The fast scheduling indication for requesting a data packet is used to instruct a network side to fast schedule downlink data, and is usually used in a scenario in which a current cache already satisfies a condition.

The to-be-received information is used to indicate information about data that the UE waits to receive, and may include at least one of information such as a size of a to-be-received data packet, a delay of to-be-received data, and an identifier of a to-be-received data packet. The identifier of the to-be-received data packet herein is used to determine data a cache of the UE is waiting to receive. Specifically, the identifier of the to-be-received data packet may be an IP 5-tuple corresponding to the data packet, that is, an IP address, a source port, a destination IP address, a destination port, and the transmission layer protocol, or may be a serial number of an identifier corresponding to the data packet. The delay of the to-be-received data indicates that the UE needs to receive the to-be-received data in the time.

The service status information is used to indicate a play status of a current service, for example, indicate that the current service is in a play state, an initial wait state, a stalling wait state, or the like.

The local routing information may include at least one of information such as information indicating that the UE supports local routing and information about target UE.

It should be noted that in this embodiment of the present invention, the local routing information and the service identification information may be together used to indicate a service in which local routing can be performed. The service identifier information herein may further include a bearer identifier of the service or a service type, for example, a server address corresponding to the service. This is not specifically limited in this embodiment of the present invention. The local routing is for a point-to-point communication service type.

The TCP proxy information is used to indicate whether a TCP proxy function is supported, a specific identifier of a service that needs TCP proxy, and/or the like. Specifically, the TCP proxy information may include information indicating that the UE supports the TCP proxy.

It should be noted that in this embodiment of the present invention, the TCP proxy information and the service identification information may be together used to indicate TCP proxy can be performed for the service. The service identifier information herein may further include a bearer identifier or a service type of the service, for example, a server address corresponding to the service. This is not specifically limited in this embodiment of the present invention.

It should be noted that in this embodiment of the present invention, in addition to the service information of the UE, the first information may further include other information, for example, information about a sensor of the UE, user behavior information, or status information of the UE. Such information may be used to assist the first network device in determining the second information. This is not specifically limited in this embodiment of the present invention.

The information about the sensor of the UE includes at least one of the following information: a motion rate of the UE, a moving trace of the UE, and motion direction information of the UE.

The user behavior information includes at least one of the following information: service termination, service suspension, screen locking, and user shutdown.

The status information of the UE includes at least one of the following information: a quantity of electricity of the UE, screen resolution of the UE, and a screen size of the UE.

It should be noted that in each embodiment of the present invention, "at least one" may be specifically one, or may be a combination of multiple. This is not specifically limited in the embodiments of the present invention.

Specifically, in step S303 in this embodiment of the present invention, the second information includes service data priority information. The service data priority information is used to represent the QoS of the service.

Specifically, the service data priority information is usually used to reflect a priority of scheduling or processing of the service data, and the QoS of the service usually depends on the priority of scheduling or processing of the service data. Therefore, service priority information may be used to represent the QoS of the service.

It should be noted that the service data priority information may include only unidirectional priority information, for example, include only uplink priority information or include only downlink priority information. Certainly, the service data priority information may include both uplink priority information and downlink priority information. This is not specifically limited in this embodiment of the present invention.

Optionally, the second information further includes at least one of the following information: a service identifier of the service, a minimum delay of the service, a maximum throughput of the service, a maximum bit rate of the service, a guaranteed bit rate of the service, and reliability and a minimum cost of the service.

The service identifier of the service is used to identify the service, and may be specifically a name of the service, a serial number of the service, or bearer interface information of the service between routing nodes, for example, a tunnel endpoint identifier (English: Tunnel Endpoint Identifier, TEID for short) or an Internet Protocol (English: Internet Protocol, IP for short) address, or may be all or some information of an IP 5-tuple of the service, that is, an IP address, a source port, a destination IP address, a destination port, and a transport layer protocol. This is not specifically limited in this embodiment of the present invention.

Specifically, the second network side device may obtain priority information of a specific service by using the second information, so as to determine a priority of scheduling or processing of a corresponding service data packet.

It should be noted that the scheduling herein may alternatively be a routing behavior on a data packet, for example, transmission or submission of the data packet.

Based on the quality of service control method provided in this embodiment of the present invention, in this embodiment of the present invention, the first network device receives the first information sent by the UE, and the first information includes the service information of the UE. Therefore, the first network device may determine the second information according to the first information, and send the second information to the second network device. The second information includes the information used to represent the QoS of the service. That is, in this embodiment of the present invention, a QoS parameter can be flexibly adjusted according to the service information of the UE. By contrast, in the prior art, the QoS parameter is usually fixed when the service is performed. Therefore, proper resource allocation and use can be ensured, thereby improving resource utilization.

For example, for a video service, an initial wait delay is an important indicator for evaluating a video application. Assuming that the service information that is received by the first network device and that is sent by the UE is that the service is in an initial wait phase of the video service, the first network device may determine, according to the service information, the second information including the information used to represent the QoS of the service. For example, the second information is information used to indicate a priority of scheduling or sending of a data packet at each routing node on a network side. In this way, after the first network device sends the second information to the second network device, preferential scheduling of the data packet of the video service can be ensured, that is, proper resource allocation and use are ensured, and a wait delay of a user can be reduced, thereby improving user experience.

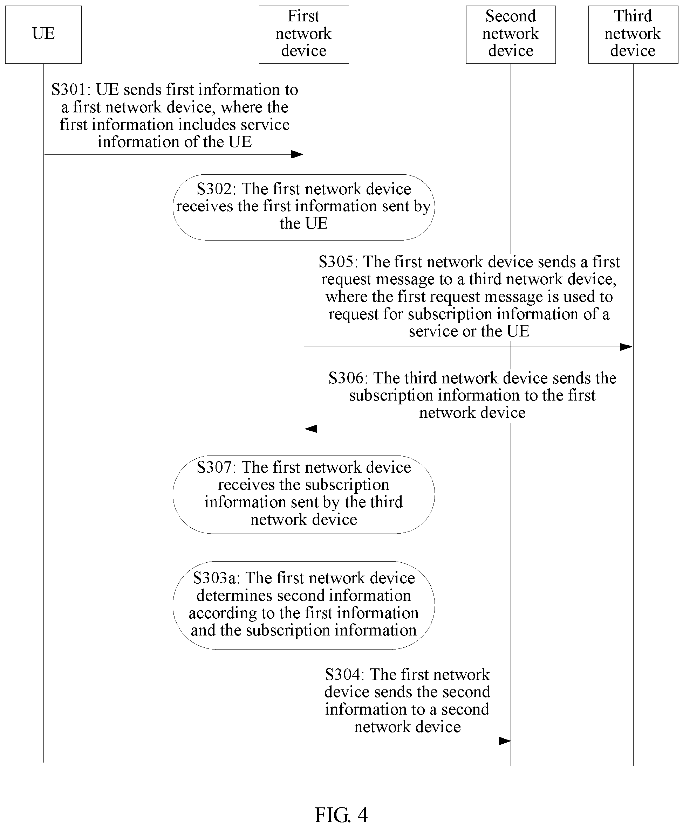

Optionally, as shown in FIG. 4, before the determining, by the first network device, second information according to the first information (step S303), the method may further include the following steps.

S305: The first network device sends a first request message to a third network device, where the first request message is used to request for subscription information of the service or the UE.

Specifically, the third network device in this embodiment of the present invention is a network device storing the subscription information of the service or the UE, and may be any one of the foregoing network devices. This is not specifically limited in this embodiment of the present invention.

Optionally, the subscription information of the UE may specifically include: priority information of the UE, service subscription data (that is, a QoS parameter of the service) of the UE, and/or the like.

S306: The third network device sends the subscription information to the first network device.

S307: The first network device receives the subscription information sent by the third network device.

The determining, by the first network device, second information according to the first information (step S303) may specifically include the following step.

S303a: The first network device determines the second information according to the first information and the subscription information.

The second information is determined according to both the first information and the subscription information, so that subscription data can be considered while the quality of service of the service of the UE is ensured on a network side. More reliable assurance is provided for different UEs or services according to subscription information

It should be noted that in this embodiment of the present invention, step S305 and steps S301 and S302 are not necessarily performed according to a chronological order. Step S305 may be first performed, and then steps S301 and S302 are performed. Alternatively, steps S301 and S302 may be first performed, and then step S305 is performed. Alternatively, step S305 and steps S301 and S302 may be performed at the same time. This is not specifically limited in this embodiment of the present invention.

It should be noted that if the first network device has the subscription information of the service or the UE, the foregoing request process is not required. This case is not specifically limited in this embodiment of the present invention.

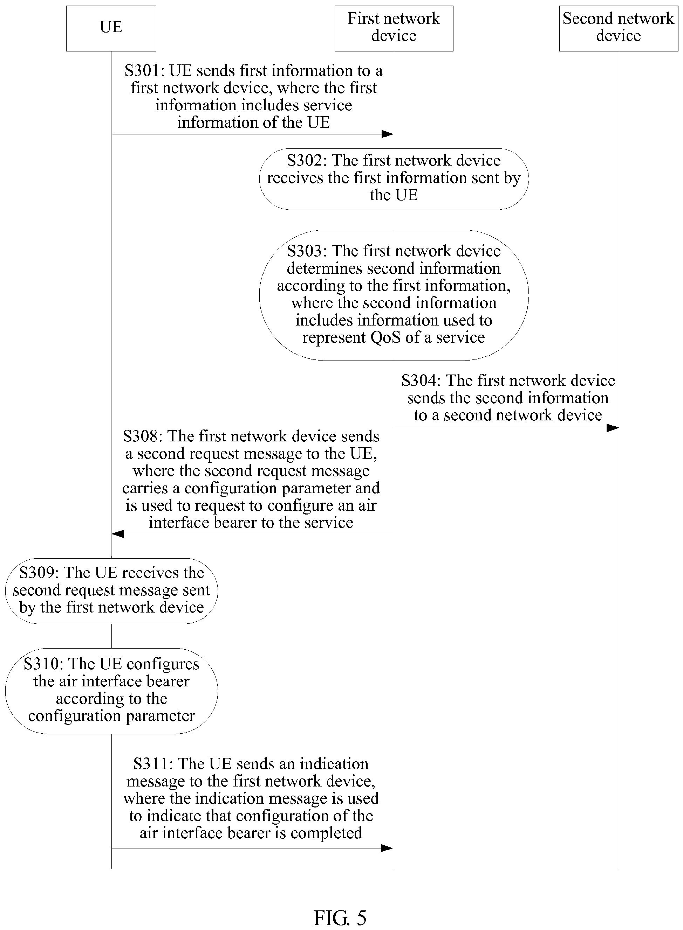

Optionally, as shown in FIG. 5, after the first network device determines the second information of the service according to the first information of the service (step S303), the method may further include the following steps.

S308: The first network device sends a second request message to the UE, where the second request message carries a configuration parameter and is used to request to configure an air interface bearer for the service.

Specifically, in an LTE system, the second request message may be a radio resource control (English: Radio Resource Control, RRC for short) message, for example, an RRC connection reconfiguration message or an RRC connection establishment message. This is not specifically limited in this embodiment of the present invention.

S309: The UE receives the second request message sent by the first network device.

S310: The UE configures the air interface bearer according to the configuration parameter.

S311: The UE sends an indication message to the first network device, where the indication message is used to indicate that configuration of the air interface bearer is completed.

Specifically, in the LTE system, the indication message may be an RRC configuration complete message. This is not specifically limited in this embodiment of the present invention.

That is, in this embodiment of the present invention, the air interface bearer may be configured for the service of the UE, so that the service can be transmitted over an air interface.

It should be noted that in this embodiment of the present invention, steps S308 to S311 and step S304 are not necessarily performed according to a chronological order. Steps S308 to S311 may be first performed, and then step S304 is performed. Alternatively, step S304 may be first performed, and then steps S308 to S311 are performed. Alternatively, steps S308 to S311 and step S304 may be performed at the same time. This is not specifically limited in this embodiment of the present invention.

It should be noted that in the embodiment shown in FIG. 5, step S311 is an optional step. This is not specifically limited in this embodiment of the present invention.

Optionally, the sending, by the first network device, the second information to the second network device (step S304) may be specifically implemented in the following several manners.

### First manner:

The first network device sends the second information to the second network device by using a signaling transmission channel between the first network device and the second network device.

That is, the signaling transmission channel exists between the first network device and the second network device, and the second information may be transmitted by using the signaling transmission channel.

For example, the second information may be transmitted by using a signaling transmission channel of an SlAP (English: S1 application protocol) used by an eNB in the LTE system to send a message to an MME, of an S 11 between the MME and an SGW, or of an S5/S8 interface between the SGW and a PGW.

### Second manner:

The first network device encapsulates the second information in a service data packet header, and sends the second information to the second network device.

Usually, when a service data packet is transmitted between two routing nodes, the service data packet includes a service data packet header between the routing nodes. Therefore, in this embodiment of the present invention, the second information may be encapsulated in the service data packet header, and then sent to the second network device.

Specifically, in the implementation, the encapsulating, by the first network device, the second information in a service data packet header, and sending the second information to the second network device may specifically include: encapsulating, by the first network device, the second information in an IP data packet header, for example, in a differentiated services code point (English: Differentiated Services Code Point, DSCP for short) field or a newly added field of the IP data packet header, and sending the second information to the second network device; or encapsulating, by the first network device, the second information in a GPRS tunneling protocol (English: GPRSTunnellingProtocol, GTP for short) data packet, for example, in an extension field of a GTP-U, and sending the second information to the second network device.

Certainly, the first network device may alternatively encapsulate the second information in another field of the IP data packet header or the GTP data packet header, and sends the second information to the second network device. Alternatively, the first network device may define a new data packet header format to encapsulate the second information. This is not specifically limited in this embodiment of the present invention.

It should be noted that the foregoing only provides, by using an example in which the service data packet header is an IP data packet header or a GTP data packet header, a specific implementation of the encapsulating, by the first network device, the second information in a service data packet header, and sending the second information to the second network device. Certainly, the service data packet header may alternatively be a data packet header of another type. This is not specifically limited in this embodiment of the present invention.

### Third manner: a combination of the first manner and the second manner

That is, some information in the second information is transmitted in the first manner, and some information is transmitted in the second manner.

For example, the first network side device may send the minimum delay of the service, the maximum throughput of the service, the maximum bit rate of the service, the guaranteed bit rate of the service, or the reliability and the minimum cost of the service to the second network side device by using the signaling transmission channel. In a data transmission process, the first network side device encapsulates a data packet or the service data priority information in a header of a service data packet, and sends the data packet or the service data priority information to the second network side device.

Preferably, in the foregoing embodiments, the first network device may be a network device obtaining an air-interface resource allocation status in real time in a data transmission process.

For example, in the LTE system, the first network device is specifically an eNB. In a UMTS, the first network device may be an RNC or a NodeB, and the like.

The first network device is a network device that can obtain an air-interface resource allocation status in real time in a data transmission process. Therefore, when receiving the first information sent by the UE and determining the second information according to the first information, the first network device may consider an actual air-interface resource allocation status and a service change, obtains the second information, and sends the second information to the second network side device, so that the QoS of the service is better ensured, thereby improving user experience.

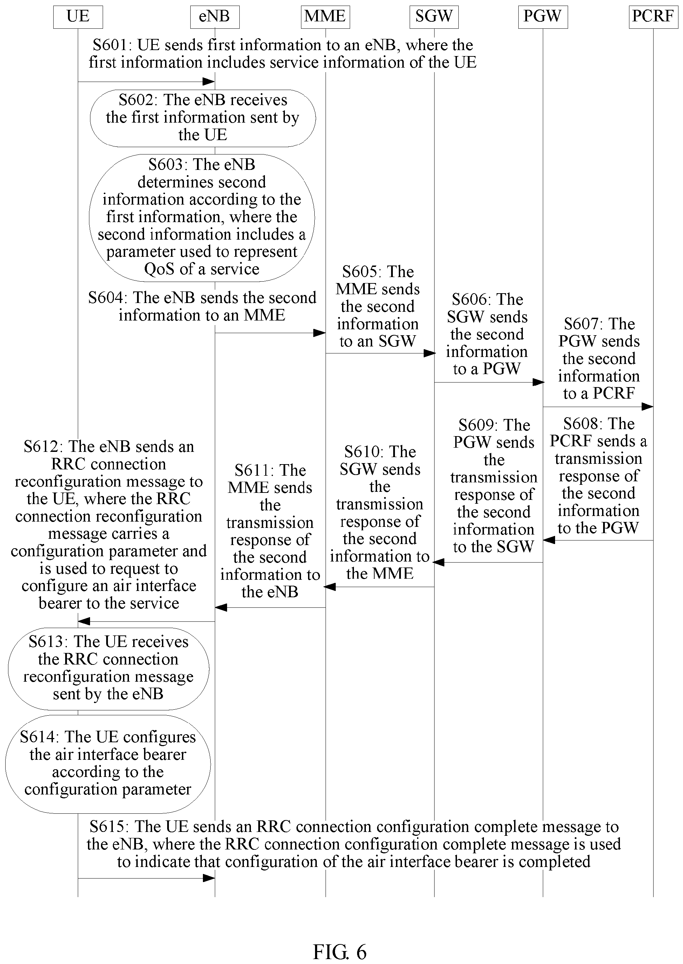

A specific process of quality of service control is provided below with reference to the foregoing embodiments of the quality of service control method and by using an example in which the mobile communications system is an existing LTE system. As shown in FIG. 6, the specific process includes the following steps.

S601: UE sends first information to an eNB, where the first information includes service information of the UE.

S602: The eNB receives the first information sent by the UE.

S603: The eNB determines second information according to the first information, where the second information includes a parameter used to represent QoS of the service.

S604: The eNB sends the second information to an MME.

S605: The MME sends the second information to an SGW.

S606: The SGW sends the second information to a PGW.

S607: The PGW sends the second information to a PCRF.

S608: The PCRF sends a transmission response of the second information to the PGW.

S609: The PGW sends the transmission response of the second information to the SGW.

S610: The SGW sends the transmission response of the second information to the MME.

S611: The MME sends the transmission response of the second information to the eNB.

S612: The eNB sends an RRC connection reconfiguration message to the UE, where the RRC connection reconfiguration message carries a configuration parameter and is used to request to configure an air interface bearer for the service.

S613: The UE receives the RRC connection reconfiguration message sent by the eNB.

S614: The UE configures the air interface bearer according to the configuration parameter.

S615: The UE sends an RRC connection configuration complete message to the eNB, where the RRC connection configuration complete message is used to indicate that configuration of the air interface bearer is completed.

Specifically, for detailed descriptions of related steps in the embodiment shown in FIG. 6, refer to the embodiments shown in FIG. 3 to FIG. 5, and details are not described in this embodiment of the present invention again.

It should be noted that in this embodiment of the present invention, steps S612 to S615 are optional steps. Step S604 and step S605 may be replaced with directly sending, by the eNB, the second information to the SGW without participation of the MME. This case is not specifically limited in this embodiment of the present invention.

The embodiment shown in FIG. 6 is a specific description of the foregoing method embodiment. Therefore, for a beneficial effect of the embodiment shown in FIG. 6, refer to the foregoing method embodiment, and details are not described in this embodiment of the present invention again.

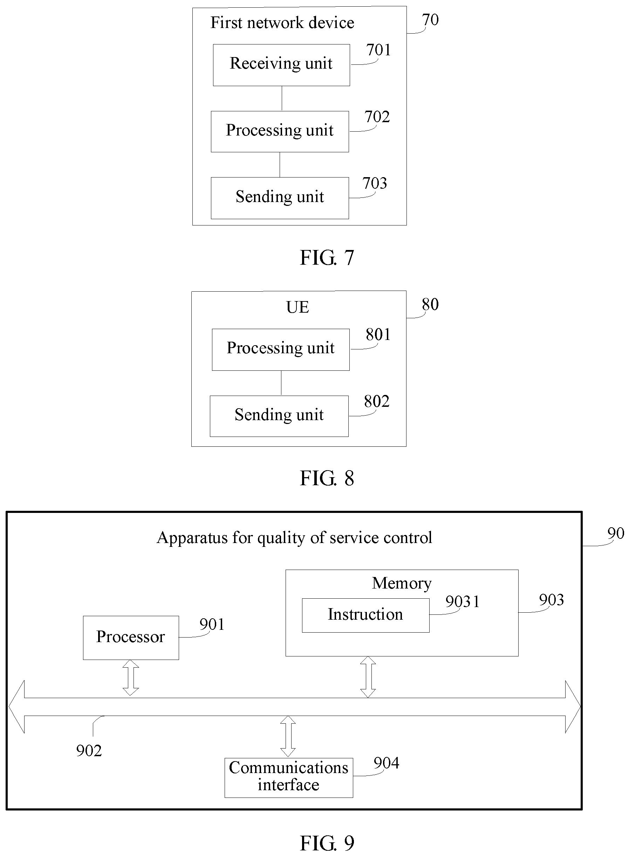

An embodiment of the present invention provides a first network device 70. As shown in FIG. 7, the first network device 70 includes: a receiving unit 701, a processing unit 702, and a sending unit 703.

The receiving unit 701 is configured to receive first information sent by UE, where the first information includes service information of the UE.

The processing unit 702 is configured to determine second information according to the first information, where the second information includes information used to represent QoS of the service.

The sending unit 703 is configured to send the second information to a second network device.

Optionally, the sending unit 703 is further configured to: before the processing unit 702 determines the second information according to the first information, send a first request message to a third network device, where the first request message is used to request for subscription information of the service or the UE.

The receiving unit 701 is further configured to receive the subscription information sent by the third network device.

The processing unit 702 is specifically configured to determine the second information according to the first information and the subscription information.

Optionally, the service information of the UE includes at least one of the following information: service identifier information, request indication type information, to-be-received data information, service status information, local routing information, transmission control protocol (TCP) proxy information, and data routing information.

Optionally, the second information includes service data priority information. The service data priority information is used to represent the QoS of the service.

Optionally, the second information further includes at least one of the following information: a service identifier of the service, a minimum delay of the service, a maximum throughput of the service, a maximum bit rate of the service, a guaranteed bit rate of the service, and reliability and a minimum cost of the service.

Optionally, in a possible implementation, the sending unit 703 is specifically configured to send the second information to the second network device by using a signaling transmission channel between the first network device 70 and the second network device.

Optionally, in a possible implementation, the sending unit 703 is specifically configured to encapsulate the second information in a service data packet header, and send the second information to the second network device.

Further, the sending unit 703 is specifically configured to encapsulate the second information in a DSCP field or a newly added field of an IP data packet header, and send the second information to the second network device; or encapsulate the second information in an extension field of a GTP data packet header, and send the second information to the second network device.

Preferably, the first network device 70 is a network device obtaining an air-interface resource allocation status in real time in a data transmission process.

It should be noted that the sending unit 703 in this embodiment may be an interface circuit having a transmission function on the first network device 70, for example, a transmitter. The receiving unit 701 may be an interface circuit having a reception function on the first network device 70, for example, a receiver. The processing unit 702 may be an independently disposed processor, or may be integrated in a processor of the first network device 70 for implementation. In addition, the processing unit 702 may alternatively be stored in a memory of the first network device 70 in a form of program code, and is called by a processor of the first network device 70 to perform a function of the processing unit 702. The processor described herein may be a central processing unit (English: Central Processing Unit, CPU for short), or an application-specific integrated circuit (English: Application Specific Integrated Circuit, ASIC for short), or may be configured as one or more integrated circuits for implementing this embodiment of the present invention.

Specifically, for a method for exchanging information by using the first network device 70 provided in this embodiment of the present invention, refer to the foregoing method embodiment, and details are not described in this embodiment of the present invention again.

Based on the first network device provided in this embodiment of the present invention, in this embodiment of the present invention, the first network device receives the first information sent by the UE, and the first information includes the service information of the UE. Therefore, the first network device may determine the second information according to the first information, and send the second information to the second network device, where the second information includes the information used to represent the QoS of the service. That is, in this embodiment of the present invention, a QoS parameter can be flexibly adjusted according to the service information of the UE. By contrast, in the prior art, the QoS parameter is usually fixed when the service is performed. Therefore, proper resource allocation and use can be ensured, thereby improving resource utilization.

An embodiment of the present invention further provides UE 80. As shown in FIG. 8, the UE 80 includes: a processing unit 801 and a sending unit 802.

The processing unit 801 is configured to obtain first information, where the first information includes service information of the UE 80.

The sending unit 802 is configured to send the first information to a first network device.

Optionally, the service information of the UE 80 includes at least one of the following information: service identifier information, request indication type information, to-be-received data information, service status information, local routing information, transmission control protocol (TCP) proxy information, and data routing information.

Preferably, the first network device is a network device obtaining an air-interface resource allocation status in real time in a data transmission process.

It should be noted that the sending unit 802 in this embodiment may be an interface circuit having a transmission function on the UE 80, for example, a transmitter. The processing unit 801 may be an independently disposed processor, or may be integrated in a processor of the UE 80 for implementation. In addition, the processing unit 801 may be stored in a memory of the UE 80 in a form of program code, and is called by a processor in the UE 80 to perform a function of the processing unit 801. The processor described herein may be a CPU, or an ASIC, or may be configured as one or more integrated circuits for implementing this embodiment of the present invention.

Specifically, for a method for exchanging information by using the UE 80 provided in this embodiment of the present invention, refer to the foregoing method embodiment, and details are not described in this embodiment of the present invention again.

Based on the UE provided in this embodiment of the present invention, in this embodiment of the present invention, the UE sends the first information to the first network device, and the first information includes the service information of the UE. Therefore, the first network device may determine second information according to the first information, and send the second information to a second network device. The second information includes information used to represent QoS of the service. That is, in this embodiment of the present invention, a QoS parameter can be flexibly adjusted according to the service information of the UE. By contrast, in the prior art, the QoS parameter is usually fixed when the service is performed. Therefore, proper resource allocation and use can be ensured, thereby improving resource utilization.

An embodiment of the present invention further provides an apparatus 90 for quality of service control. As shown in FIG. 9, the apparatus 90 for quality of service control includes: a processor 901, a memory 903, a bus 902, and a communications interface 904. The processor 901, the memory 903, and the communications interface 904 are connected and perform mutual communication by using the bus 902.

The processor 901 may be a single-core or multi-core central processing unit, or an application-specific integrated circuit, or may be configured as one or more integrated circuits for implementing this embodiment of the present invention.

The memory 903 may be a high-speed random access memory (English: Random Access Memory, RAM for short), or may be a non-volatile memory (English: non-volatile memory), for example, at least one magnetic disk storage.

The memory 903 is configured to store a computer executable instruction 9031. Specifically, the computer executable instruction 9031 may include program code.

When the apparatus 90 for quality of service control runs, the processor 901 executes the computer executable instruction 9031 and may perform the procedure of the quality of service control method that is on a UE side or a first network device side and that is described in any method embodiment in FIG. 3 to FIG. 6. When the procedure of the quality of service control method that is on the UE side and that is described in any method embodiment in FIG. 3 to FIG. 6 is performed, the apparatus 90 for quality of service control is UE. When the procedure of the quality of service control method that is on the first network device side and that is described in any method embodiment in FIG. 3 to FIG. 6 is performed, the apparatus 90 for quality of service control is a first network device.

The apparatus 90 for quality of service control provided in this embodiment of the present invention can be configured to perform the foregoing method. Therefore, for a technical effect that can be obtained by the apparatus 90 for quality of service control, refer to the description in the foregoing method embodiment, and details are not described herein again.

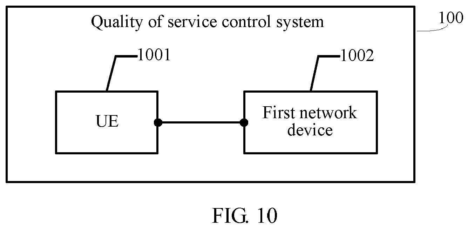

Corresponding to the method embodiment, an embodiment of the present invention provides a quality of service control system 100. As shown in FIG. 10, the quality of service control system includes UE 1001 and a first network device 1002.

The UE 1001 may be UE having a function of the UE 80 in the foregoing embodiment, and the first network device 1002 may be UE having a function of the first network device 70 in the foregoing embodiment.

Specifically, for a method for controlling quality of service by using the quality of service control system 100 provided in this embodiment of the present invention, refer to the foregoing method embodiment, and details are not described in this embodiment of the present invention again.

The quality of service control system 100 provided in this embodiment of the present invention can be configured to perform the foregoing method. Therefore, for a technical effect that can be obtained by the quality of service control system 100, refer to the description in the foregoing method embodiment, and details are not described herein again.

In addition, a computer readable medium (or medium) is further provided, including a computer readable instruction performing, when executed, the following operation: performing an operation of any first network device in the method embodiments shown in FIG. 3 to FIG. 6 in the foregoing embodiments.

In addition, a computer program product is further provided, including the foregoing computer readable medium.

It should be understood that sequence numbers of the foregoing processes do not mean execution sequences in various embodiments of the present invention. The execution sequences of the processes should be determined according to functions and internal logic of the processes, and should not be construed as any limitation on the implementation processes of the embodiments of the present invention.

It may be clearly understood by a person skilled in the art that, for the purpose of convenient and brief description, in the apparatus described above, division of the foregoing function modules is taken as an example for illustration. In actual application, the foregoing functions can be allocated to different modules and implemented according to a requirement, that is, an inner structure of an apparatus is divided into different function modules to implement all or part of the functions described above. For a detailed working process of the foregoing system, apparatus, and unit, reference may be made to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, the module or unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of the embodiments.

In addition, functional units in the embodiments of the present invention may be integrated into one processing unit, or each of the units may exist alone physically, or two or more units are integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer-readable storage medium. Based on such an understanding, the technical solutions of the present invention essentially, or the part contributing to the prior art, or all or a part of the technical solutions may be implemented in the form of a software product. The software product is stored in a storage medium and includes several instructions for instructing a computer device (which may be a personal computer, a server, or a network device) or a processor to perform all or a part of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A quality of service control method, wherein the method comprises:
receiving, by a first network device, first information sent by user equipment (UE), wherein the first information comprises service information of the UE;
determining, by the first network device, second information according to the first information, wherein the second information comprises information used to represent quality of service (QoS) of the service; and
sending, by the first network device, the second information to a second network device.

2. The method according to claim 1, wherein before the determining, by the first network device, the second information according to the first information, the method further comprises:
sending, by the first network device, a first request message to a third network device, wherein the first request message is used to request for subscription information of the service or the UE; and
receiving, by the first network device, the subscription information sent by the third network device; and
wherein the determining, by the first network device, the second information according to the first information comprises:
determining, by the first network device, the second information according to the first information and the subscription information.

3. The method according to claim 1 or 2, wherein the service information of the UE comprises at least one of the following information: service identifier information, request indication type information, to-be-received data information, service status information, local routing information, transmission control protocol (TCP) proxy information, and data routing information.

4. The method according to any one of claims 1 to 3, wherein the second information comprises service data priority information, and the service data priority information is used to represent the QoS of the service.

5. The method according to claim 4, wherein the second information further comprises at least one of the following information: a service identifier of the service, a minimum delay of the service, a maximum throughput of the service, a maximum bit rate of the service, a guaranteed bit rate of the service, and reliability and a minimum cost of the service.

6. The method according to any one of claims 1 to 5, wherein the sending, by the first network device, the second information to the second network device comprises:
sending, by the first network device, the second information to the second network device by using a signaling transmission channel between the first network device and the second network device.

7. The method according to any one of claims 1 to 5, wherein the sending, by the first network device, the second information to the second network device comprises:
encapsulating, by the first network device, the second information in a service data packet header, and sending the second information to the second network device.

8. The method according to claim 7, wherein the encapsulating, by the first network device, the second information in a service data packet header, and the sending the second information to the second network device comprises:
encapsulating, by the first network device, the second information in a differentiated services code point (DSCP) field or a newly added field of an Internet Protocol IP data packet header, and sending the second information to the second network device; or
encapsulating, by the first network device, the second information in an extension field of a serving general packet radio service tunneling protocol (GTP) data packet header, and sending the second information to the second network device.

9. The method according to any one of claims 1 to 8, wherein the first network device is a network device obtaining an air-interface resource allocation status in real time in a data transmission process.

10. A quality of service control method, wherein the method comprises:
obtaining, by user equipment (UE), first information, wherein the first information comprises service information of the UE; and
sending, by the UE, the first information to a first network device.

11. The method according to claim 10, wherein the service information of the UE comprises at least one of the following information:
service identifier information, request indication type information, to-be-received data information, service status information, local routing information, transmission control protocol (TCP) proxy information, and data routing information.

12. A first network device, wherein the first network device comprises: a receiving unit, a processing unit, and a sending unit, wherein,
the receiving unit is configured to receive first information sent by user equipment (UE), wherein the first information comprises service information of the UE;
the processing unit is configured to determine second information according to the first information, wherein the second information comprises information used to represent quality of service (QoS) of the service; and
the sending unit is configured to send the second information to a second network device.

13. The first network device according to claim 12, wherein
the sending unit is further configured to: before the processing unit determines the second information according to the first information, send a first request message to a third network device, wherein the first request message is used to request for subscription information of the service or the UE;
the receiving unit is further configured to receive the subscription information sent by the third network device; and
the processing unit is specifically configured to determine the second information according to the first information and the subscription information.

14. The first network device according to claim 12 or 13, wherein the service information of the UE comprises at least one of the following information: service identifier information, request indication type information, to-be-received data information, service status information, local routing information, transmission control protocol (TCP) proxy information, and data routing information.

15. The first network device according to any one of claims 12 to 14, wherein the second information comprises service data priority information, and the service data priority information is used to represent the QoS of the service.

16. The first network device according to claim 15, wherein the second information further comprises at least one of the following information: a service identifier of the service, a minimum delay of the service, a maximum throughput of the service, a maximum bit rate of the service, a guaranteed bit rate of the service, and reliability and a minimum cost of the service.

17. The first network device according to any one of claims 12 to 16, wherein the sending unit is specifically configured to:
send the second information to the second network device by using a signaling transmission channel between the first network device and the second network device.

18. The first network device according to any one of claims 12 to 16, wherein the sending unit is specifically configured to encapsulate the second information in a service data packet header, and send the second information to the second network device.

19. The first network device according to claim 18, wherein the sending unit is specifically configured to:
encapsulate the second information in a differentiated services code point (DSCP) field or a newly added field of an Internet Protocol IP data packet header, and send the second information to the second network device; or
encapsulate the second information in an extension field of a serving general packet radio service tunneling protocol (GTP) data packet header, and send the second information to the second network device.

20. The first network device according to any one of claims 12 to 19, wherein the first network device is a network device obtaining an air-interface resource allocation status in real time in a data transmission process.

21. User equipment (UE), wherein the UE comprises: a processing unit and a sending unit, wherein,
the processing unit is configured to obtain first information, wherein the first information comprises service information of the UE; and
the sending unit is configured to send the first information to a first network device.

22. The UE according to claim 21, wherein the service information of the UE comprises at least one of the following information: service identifier information, request indication type information, to-be-received data information, service status information, local routing information, transmission control protocol (TCP) proxy information, and data routing information.

23. A first network device, wherein the first network device comprises a processor, a memory, a bus, and a communications interface, wherein,
the memory is configured to store a computer executable instruction; the processor is connected to the memory by using the bus; and when the first network device runs, the processor executes the computer executable instruction stored in the memory, so that the first network device performs the quality of service control method according to any one of claims 1 to 9.

24. User equipment (UE), wherein the UE comprises a processor, a memory, a bus, and a communications interface, wherein,
the memory is configured to store a computer executable instruction; the processor is connected to the memory by using the bus; and when the UE runs, the processor executes the computer executable instruction stored in the memory, so that the UE performs the quality of service control method according to claim 10 or 11.
